# EUROPEAN PATENT SPECIFICATION

(11) **EP 3 843 874 B1**
(45) Date of publication and mention of the grant of the patent: **25.10.2023**
(21) Application number: 19737698.1
(22) Date of filing: 03.07.2019
(51) Int. Cl.: B01D 39/16

(54) **PRODUCTION METHOD OF A FILTRATION SYSTEM**
VERFAHREN ZUR HERSTELLUNG EINES FILTERSYSTEMS
PROCÉDÉ DE FABRICATION D'UN SYSTÈME DE FILTRATION

(30) Priority: 29.08.2018 TR 201812351
(43) Date of publication of application: 07.07.2021
(73) Proprietor: Arçelik Anonim Sirketi, 34445 Istanbul (TR)
(72) Inventor: YUSUFOGLU, Yusuf, 34950 ISTANBUL (TR); KAYMAKCI, Orkun, 34950 ISTANBUL (TR); ARITURK, Gizem Semra, 34950 ISTANBUL (TR); YESILCUBUK, Suleyman Alper, 34950 ISTANBUL (TR); SEZER, Mustafa, 34950 ISTANBUL (TR)
(86) International application number: PCT/EP2019/067903
(87) International publication number: WO 2020/043368

(56) References cited:
- EP-A2- 0 402 866
- GB-A- 2 450 888
- US-A1- 2010 126 124
- US-A1- 2011 030 557
- US-B2- 6 846 342
- US-B2- 8 614 259

## Description

The present invention relates to the production method of a recyclable filtration system and the use thereof in white goods.

Microfibers formed as a result of the operation of laundry washing and drying machines cannot be retained at the urban filtration systems due to their small dimensions and are dumped into seas, lakes and soil, thus causing environmental hazard. In particular when dumped into seas, microfibers are swallowed by marine animals, thus adversely affecting the marine animals and threatening the food chain of the humans.

In the state of the art American Patent No. US 6,756,412 B2, thermoplastic composites with improved mechanical properties with the use of fibers and a method for producing said composites are disclosed. Recycled plastic is used for the production of the composites. Moreover, US6846342B2 discloses a filter pack comprising a filter and banding frame, which is fully shreddable for recycling.

The state of the art American Patent Application No. US 6,037,282 relates to a method for producing nonwoven fabric from recycled textile waste. US8614259B2 discloses also a process for making a solid component out of recycled powder coat material.

The aim of the present invention is the realization of white goods comprising a filtration system which can recycled together with the microfibers accumulated in the filtration system of the white goods.

The filtration system obtained by the production method of claim 1 comprises at least one plastic filter support strip, a polymer filter and waste microfibers.

Said filtration system can be used in white goods such as laundry washing machine, laundry drying machine, air conditioner, air cleaner, water purifier, etc.

The filtration system realized in order to attain the aim of the present invention is illustrated in the attached figures, where:

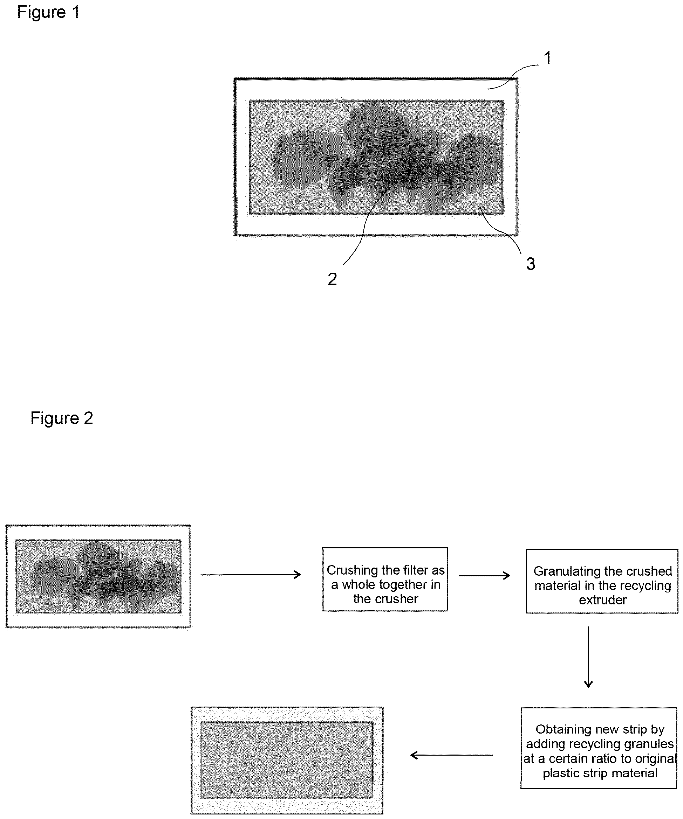

Figure 1 is the top view of the filtration system of the present invention.
Figure 2 is the recycled production method of the filtration system of the present invention.

The elements in the figures are numbered as follows:
1. Plastic filter support strip
2. Waste microfiber
3. Polymer filter

The filtration system of the present invention comprises at least one plastic filter support strip (1) and a polymer filter (3).

The filtration system of the present invention comprises at least one plastic filter support strip (1) containing waste microfibers (2).

Microfibers accumulated in the filtration systems of white goods such as laundry washing machine, laundry drying machine, etc. are recycled together with the PET filter and the plastic filter support strips (1) holding the filter, and since by means of the recycled filtration system obtained in the above-mentioned manner, said waste microfibers (2) are not dumped in nature, preventing any harm against the environment and human health. Moreover, by using the waste microfibers (2) in the plastic composites, cost advantage is provided in the production of the plastics. Furthermore, the microfibers increase the elastic modulus of the plastic strips, thus improving the mechanical properties thereof.

In an embodiment of the present invention, the polymer filter (3) is polyethylene terephthalate (PET), polypropylene (PP), high density polyethylene (HDPE), polytetrafluoroethylene (Teflon, PTFE) or polyamide (PA) nylon.

In the preferred embodiment of the present invention, the polymer filter (3) is polyethylene terephthalate.

The filtration system production method of the present invention is defined in claim 1 and comprises the steps of
- crushing the filter at the end of its economic life as a whole together with the waste microfibers (2) and the plastic filter support strip (1) in the crusher,
- granulating the crushed materials in the recycling extruder,
- obtaining recycled plastic support strip by means of injection molding method from the granules of the mixture of the filter, the plastic filter support strip (1) and microfibers or adding the granules of the mixture of the filter, the plastic filter support strip (1) and microfibers at a certain ratio into the original plastic strip material during the injection molding or first mixing the granules of the mixture of the filter, the plastic filter support strip (1) and microfibers with the original plastic strip material by means of compounding extrusion method and then obtaining the recycled plastic support strip with the use of obtained mixture by means of the injection molding method,
- obtaining the filtration system ready for reuse in the filtration applications by mounting new filters to the obtained plastic support strips.

By means of the filtration system of the present invention, the microfibers accumulated in the filtration system of the white goods are recycled as a whole together with the relevant filtration system (PET filter and plastic filter support strips (1)). Since the recycled material is used again for producing the polymer strips of the filtration system, a full recycling is provided. Thus, the amount of raw material used is minimized, the waste and toxic microfibers are made use of in the product, and thus an environmentally-friendly and fully recycled filtration system is realized.

In an embodiment of the present invention, the filtration system of the present invention is used in white goods.

In an embodiment of the present invention, the filtration system of the present invention is used in a laundry washing machine.

In an embodiment of the present invention, the filtration system of the present invention is used in a laundry drying machine.

In an embodiment of the present invention, the filtration system of the present invention is used in an air conditioner.

In an embodiment of the present invention, the filtration system of the present invention is used in a water purifier.

In an embodiment of the present invention, the filtration system of the present invention is used in an air cleaner.

## Claims

1. A production method of a filtration system comprising at least one recycled plastic filter support strip and a polymer filter, wherein the recycled plastic filter support strip comprises recycled waste microfibers, **characterized by** the steps of
- crushing a filter of a laundry washing/drying machine at the end of its economic life as a whole together with waste microfibers (2) accumulated on said filter during operation of said washing/drying machine and the plastic filter support strip(1) in the crusher,
- granulating the crushed materials in the recycling extruder,
- obtaining recycled plastic support strip by means of
o injection molding method from the granules of the mixture of the filter, the plastic filter support strip (1) and waste microfibers (2), or
o adding the granules of the mixture of the filter, the plastic filter support strip (1) and waste microfibers (2) at a certain ratio into the original plastic strip material during the injection molding, or
o first mixing the granules of the mixture of the filter, the plastic filter support strip (1) and waste microfibers (2) with the original plastic strip material by means of compounding extrusion method and then obtaining the recycled plastic support strip with the use of obtained mixture by means of the injection molding method,
- obtaining the filtration system ready for reuse in the filtration applications by mounting new filters to the obtained plastic support strips.

2. Use of the filtration system obtained by the production method of claim 1 in a white good, a laundry washing machine, a laundry drying machine, an air conditioning device, a water purifier, or an air cleaner.

## Patentansprüche

1. Ein Herstellungsverfahren für ein Filtrationssystem, das mindestens einen Filterträgerstreifen aus recyceltem Kunststoff und einen Polymerfilter umfasst, wobei der Filterträgerstreifen aus recyceltem Kunststoff recycelte Abfallmikrofasern umfasst, **ist gekennzeichnet durch** die folgenden Schritte
- Zerkleinerung eines Filters einer Wäschewasch-/Trockenmaschine am Ende seiner wirtschaftlichen Lebensdauer als Ganzes zusammen mit den Abfallmikrofasern (2), die sich während des Betriebs der Wasch-/Trockenmaschine auf dem Filter angesammelt haben, und dem Kunststoff-Filterträgerstreifen (1) in der Zerkleinerungsmaschine,
- Granulierung des zerkleinerten Materials im Recyclingextruder,
- Gewinnung eines Trägerstreifens aus recyceltem Kunststoff mit Hilfe von
o Spritzgussverfahren aus dem Granulat der Mischung aus dem Filter, dem Kunststoff-Filterträgerstreifen (1) und den Abfallmikrofasern (2), oder
o Hinzufügen des Granulats aus der Mischung des Filters, des Kunststoff-Filterträgerstreifens (1) und der Abfallmikrofasern (2) in einem bestimmten Verhältnis in das ursprüngliche Kunststoff-Streifenmaterial während dem Spritzgussverfahren, oder
o Zuerst Vermischung des Granulats der Mischung des Filters, des Kunststoff-Filterträgerstreifens (1) und der Abfallmikrofasern (2) mit dem ursprünglichen Kunststoff-Streifenmaterial mittels des Compounding-Extrusionsverfahrens und dann Gewinnung des recycelten Kunststoff-Trägerstreifens unter Verwendung der erhaltenen Mischung mittels des Spritzgussverfahrens,
- Vorbereitung des Filtersystems für die Wiederverwendung in den Filtrationsanwendungen durch Anbringen neuer Filter an den erhaltenen Kunststoffstützstreifen.

2. Verwendung des durch das Herstellungsverfahren nach Anspruch 1 erhaltenen Filtersystems in einem Haushaltsgerät, einer Wäschewaschmaschine, einem Wäschetrockner, einer Klimaanlage, einem Wasserreiniger oder einem Luftreiniger.

## Revendications

1. Une méthode de production d'un système de filtration comprenant au moins une bande de support de filtre en plastique recyclé et un filtre en polymère, dans laquelle la bande de support de filtre en plastique recyclé comprend des microfibres de déchets recyclés, **caractérisée par** les étapes suivantes
- le broyage d'un filtre d'une machine à laver/sécher le linge en fin de vie économique dans son ensemble ainsi que les déchets de microfibres (2) accumulés sur ledit filtre pendant le fonctionnement de ladite machine à laver/sécher et la bande de support du filtre en plastique (1) dans le broyeur,
- granulation des matériaux broyés dans l'extrudeuse de recyclage,
- obtention d'une bande de support en plastique recyclé au moyen de
o méthode de moulage par injection à partir des granulés du mélange du filtre, de la bande support du filtre en plastique (1) et des microfibres usagées (2), ou
o en ajoutant les granulés du mélange du filtre, de la bande support du filtre en plastique (1) et des microfibres usagées (2) dans un certain rapport au matériau de la bande en plastique d'origine pendant le moulage par injection, ou
o mélanger d'abord les granulés du mélange du filtre, de la bande support de filtre en plastique (1) et des microfibres usagées (2) avec le matériau de la bande en plastique d'origine au moyen d'une méthode d'extrusion par compoundage, puis obtenir la bande support en plastique recyclée en utilisant le mélange obtenu au moyen d'une méthode de moulage par injection,
- obtenir un système de filtration prêt à être réutilisé dans les applications de filtration en montant de nouveaux filtres sur les bandes de support en plastique obtenues.

2. Utilisation du système de filtration obtenu par le procédé de production de la déclaration 1 dans un produit blanc, une machine à laver le linge, une machine à sécher le linge, un appareil de climatisation, un purificateur d'eau ou un épurateur d'air.
